# EUROPEAN PATENT APPLICATION

(11) **EP 1 161 982 A1**
(43) Date of publication of application: **12.12.2001**
(21) Application number: 00902066.0
(22) Date of filing: 03.02.2000
(51) Int. Cl.: B01J 3/00, C12M 1/40

(54) **FLOW REACTOR OF NONEQUILIBRIUM OPEN TYPE**

(30) Priority: 04.02.1999 JP 2796299
(71) Applicant: Japan Science and Technology Corporation, Kawaguchi-shi, Saitama 332-0012 (JP)
(72) Inventor: MATSUNO, Koichiro, Saitama 350-1317 (JP)
(74) Representative: Calamita, Roberto
(86) International application number: JP0000583
(87) International publication number: WO0045947

(57) **Abstract**

A flow reactor for liquid-phase polymerization reaction, which enables controlling the degree of polymerization for, for example, amino acid polymerization, wherein the liquid reaction mixture containing the organic reactive molecules to be polymerized is emitted from a high-temperature high-pressure part (A) to a low-temperature high-pressure part (B) via a circulation line (C), whereby inhibiting the decomposition of the polymer product in the low-temperature high-pressure part (B), after which the polymer product is once again sent to the high-temperature high-pressure part (A) through the circulation line for further polymerization, and the same cycle is repeated.

## Description

### Technical Field

The present invention relates to a flow reactor of non-equilibrium open type. More specifically, the invention of the present application relates to a flow reactor of non-equilibrium open type as a novel technique for polymerizing low molecular weight organic compounds such as amino acids while easily controlling the degree of polymerization thereof at a desired level.

### Background Art

In conventional chemical polymerization reactions, generally, the degree of polymerization of the product is controlled by placing organic molecules with polymerizable reactive groups in a reaction field of acceptable strength and pressure conditions under the presence of polymerization catalysts or energy ray irradiation.

However, in such conventional methods, it is actually very difficult to control the degree of polymerization and to confine the molecular weight distribution of the product within a predetermined narrow range.

On the other hand, in nature, the existence of highly controlled reaction fields such as the hydrothermal deposit in abyssal floor, wherein the generation of polymers that constitute life forms, from low molecular weight organic compounds such as amino acids, is enabled.

Therefore, in recent years, studies focusing on natural reaction fields typically represented by such hydrothermal deposits have been carried out.

However, forming a reaction field, which imitates that of nature, is not easy, and very few studies that may develop into new techniques have actually been proposed.

Therefore, in consideration of the aforementioned background, the inventors of the present invention have considered the artificial rearrangement of "the wisdom of nature" in a more practical manner. Specifically, assiduous studies with the aim of providing a novel technical means, which enables the conversion of low molecular weight organic compounds such as amino acids into highly controlled polymers, have been carried out.

### Disclosure of Invention

In order to solve the above-described problems, the present invention firstly provides a flow reactor of non-equilibrium open type, comprising a high-temperature highpressure part, a low-temperature high-pressure part and a circulation line connecting the two parts, wherein the liquid reaction mixture containing organic reactant molecules to be polymerized is emitted into the low-temperature high-pressure part from the high-temperature high-pressure part through the circulation line, whereby inhibiting the polymer produced in the high-temperature high-pressure part from decomposing in the low-temperature high-pressure part, after which the polymer produced is once again sent to the high-temperature high-pressure part through the circulation line for further polymerization, and the same cycle is repeated.

In addition, the present invention provides the flow reactor of non-equilibrium open type wherein: secondly, the circulation line comprises a low-temperature low-pressure part installed to the downstream side of the low-temperature high-pressure part; thirdly, the circulation line comprises a low-temperature low-pressure part and a low-temperature high-pressure part installed in sequence to the downstream side of the low-temperature high-pressure part; fourthly, an outlet path for the polymer is installed in the low-temperature low-pressure part; fifthly, a supply path for the organic reactant molecules to be polymerized is installed in the low-temperature low-pressure part; and sixthly, the diameter size of the circulation line connecting the high-temperature high-pressure part with the low-temperature high-pressure part is variable and the cooling rate at the low-temperature high-pressure part is controllable.

In short, in the above-mentioned invention of the present application, an open reaction field in which the energy injection (at the high temperature side) and the energy release (at the low temperature side) are simultaneously carried out in a field open to the outside, under non-equilibrium conditions wherein a constant temperature gradient is realized is achieved. The invention of the present application facilitates the production of polymers and the controlling of the decomposition of the produced polymers, by forming a reaction field of a non-equilibrium open system, whereby providing future prospects of effectively producing a predetermined polymer of organic molecules, such as amino acids.

### Brief Description of Drawings

Figure 1 is a schematic diagram, which shows an example of the structure of the flow reactor of the present invention. Each symbol represents the following: a high-temperature high-pressure part (A); a low-temperature high-pressure part (B); a circulation line (C); a pressure-decreasing needle tube (C21); a low-temperature low-pressure part (D); an electric furnace (E); a cooling tank (F); an outlet device (G); a low-temperature high-pressure part (H); a pressure gauge having a safety device (I); an auxiliary heating part (J); a temperature measuring part (K); a pump (P).
Figure 2 is a diagram that shows the profile of high precision liquid chromatography (HPLC) for the Example.
Figure 3 is a diagram that shows the production amount of oligopeptide with time, when the temperature of the high-temperature high-pressure part (A) is 250 °C.
Figure 4 is a diagram that shows the production amount of oligopeptide with time, when the temperature of the high-temperature high-pressure part (A) is 225 °C.
Figure 5 is a diagram that shows the production amount of oligopeptide with time, when the temperature of the high-temperature high-pressure part (A) is 200 °C.
Figure 6 is a diagram that shows the production amount of oligopeptide with time, when tri-glycine is added initially.

### Best Mode for Carrying Out the Invention

The invention of the present application, has the aforementioned features, and is described further in detail hereinafter.

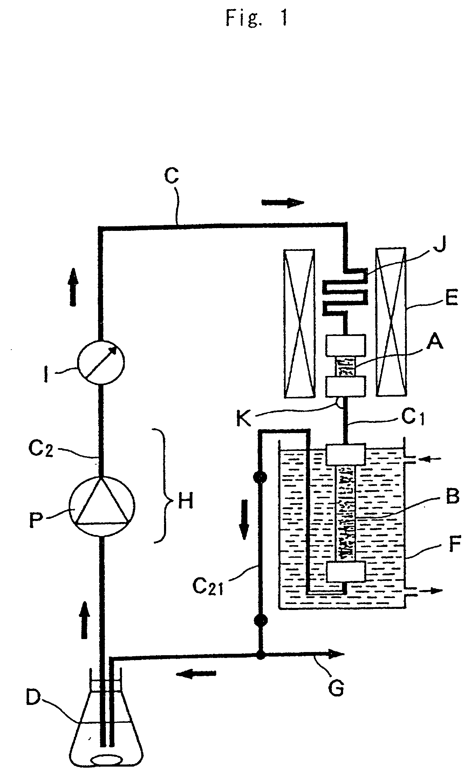

An example of the structure of the flow reactor of the present invention is shown in Figure 1. Specifically, the flow reactor of the present invention has a high-temperature high-pressure part (A) and a low-temperature high-pressure part (B) as well as a circulation line (C) that connects the two parts.

In such structure, a liquid reaction mixture containing organic reactant molecules to be polymerized is emitted into the low-temperature high-pressure part (B) from the high-temperature high-pressure part (A) through the circulation line (C), whereby inhibiting the polymer produced in the high-temperature high pressure part (A) from decomposing in the low-temperature high pressure part (B), after which the polymer is once again sent to the high-temperature high-pressure part (A) through the circulation line (C2) for further polymerization, and the cycle is repeated. That is, the high-temperature high-pressure part (A) and the low-temperature high-pressure part (B) realize a constant temperature gradient, thereby creating a field in a state of non-equilibrium.

In the flow reactor of the invention of the present application shown in Figure 1, the chamber of the high-temperature high-pressure part (A) is heated by a heating device such as an electric furnace (E), and the chamber of the low-temperature high-pressure top layer (B) is cooled, for example, by cooling water in a cooling tank (F). An open system is realized by the simultaneous injection of thermal energy (the high temperature side) and release of energy (the low temperature side), and by the contact with the electric furnace (E), an external high temperature heat source, and the cooling tank (F), a low temperature heat bath; in other words, the system is open to the outside. In addition, in the aforementioned circulation line (C2), the low-temperature low-pressure part (D) is connected to the downstream side of the low-temperature high-pressure part (B) through, for example, a pressure-decreasing needle tube (C21), and an outlet path (G) for the polymer is connected to the low-temperature low-pressure part (D).

Further, in the circulation line (C2), a non-pulsating current pump (P) as the low-temperature high-pressure part (H), a pressure gauge (I) having a safety device and the like are installed.

For example, in the aforementioned flow reactor exemplified in Figure 1, although not shown in the drawing, a low molecular weight compound such as low molecular weight amino acid or a derivative thereof, as the initial organic compound, namely, the raw material, or the reaction intermediate, is supplied to the low-temperature low-pressure part (D). Here, the organic molecules are supplied as liquids, dissolved in organic solvents or as dispersion mixtures in solvent. The liquid reaction mixture containing the supplied organic molecules is then sent to the low-temperature high-pressure part (H) to pass through the pump (P) for pressurization. The pressurized liquid reaction mixture is introduced to the high-temperature high-pressure part (A) by way of, for example, the auxiliary heating part (J).

In the high-temperature high-pressure part (A), the polymerization reaction of the organic molecules and the decomposition reaction thereof proceed simultaneously. However, by controlling the time during which the liquid reaction mixture remains in the high-temperature high-pressure part (A), the decomposition in the high-temperature part may be controlled in advance within a certain range or degree.

The liquid reaction mixture containing polymers produced by the reaction is emitted into the low-temperature high-pressure part (B) through the circulation line (C1). At this stage, as the surrounding environment is at a relatively low temperature due to cooling, the thermal decomposition of the emitted polymer product is inhibited, and the polymer for which decomposition was inhibited is held in the low-temperature high-pressure part (B).

The emission of the liquid reaction mixture into the low-temperature high-pressure part (B) from the high-temperature high-pressure part (A) is performed through the circulation line (C1). Here, as a structure of the circulation line (C1), a nozzle shape or a nozzle structure with a relatively small diameter may be considered. In the circulation line (C1) having such a nozzle shape or a nozzle structure, by making the diameter size thereof variable, the cooling rate at the low-temperature high-pressure part (B) may be controlled. The smaller the diameter, the larger the cooling rate may be. To control the cooling rate, a temperature measuring part (K) may be installed in the vicinity of the outlet of the high-temperature high-pressure part (A).

In the circulation line having, for example, the structure as described above, a polymer with a large decomposition rate may be obtained by setting the cooling rate at the low-temperature high-pressure part (B) to a value larger than the decomposition rate of the polymer.

The liquid reaction mixture containing the polymer product is sent to the low-temperature low-pressure part (D) from the low-temperature high-pressure part (B), after depressurizing by way of a pressure-decreasing means such as a pressure-decreasing needle tube (C21) or the like. All or part of the polymer product may be taken outside of the system from the low-temperature low-pressure part (D) by way of the outlet path (G).

The remaining of the polymer product, together with the liquid reaction mixture, is circulated again to the high-temperature high-pressure part (A) by way of the low-temperature high-pressure part (H) as described above. Here, the polymer product as a reactant is further converted into a polymer of another type. In such a manner, additional polymerization reactions proceed sequentially as a result of receiving thermal energy. By repeating such circulation for a required number of times, the degree of polymerization of the polymer product is sequentially increased.

Needless to say, Figure 1 simply shows one example of the present invention, and the present invention is not limited to this particular example. However, in any specific structure, the flow reactor of the present invention is characteristic in that it is a flow type reactor for polymerizing low molecular weight organic molecules such as amino acids in a non-equilibrium open system environment, wherein the liquid phase containing the organic molecules is circulated from the high-temperature high-pressure part (A) to the low-temperature high-pressure part (B), and further, to the low-temperature low-pressure part (D).

In the aforementioned description, no specific numerical values are given with respect to the terms "low temperature", "high temperature", "low pressure" and "high pressure". The specific value or range represented by each of these terms may be set in accordance with the type of organic molecules to be polymerized, the degree of polymerization of the desired polymers, the number of days during which the circulation is performed and the like. Accordingly, the term "low pressure", for example, may represent atmospheric pressure.

According to the present invention, a flow reactor for a new type of polymerization reaction, by which highly advanced control of decomposition and polymerization is enabled, is provided.

The present invention will be described in more detail hereinafter by the following Examples.

### Examples

For the structure shown in Figure 1, the high-temperature high-pressure part (A) and the low-temperature high-pressure part (B) and the circulation line (C) were all made from stainless steel (SUS 316).

To the chamber of the high-temperature high-pressure part (A), which had a volume of 15 ml, was connected the chamber of the low-temperature high-pressure part (B) with an inner diameter of 20 mm and length of 250 mm, via the circulation line (C1) tube with an inner diameter of 100 µm and a length of 50 mm. The chamber of the low-temperature high-pressure part (B) was immersed in a 20 L water bath, which had a cooling pipe for circulating a cooling medium of -20 °C. The water bath was arranged so that the temperature of water at the circulation-outlet was 0 °C.

A capillary tube with a length of 1 m and an inner diameter of 100 µm was connected to the chamber of the low-temperature high-pressure part (B), so that the pressure could be decreased to atmospheric pressure by the tube.

The flow rate of the liquid reaction mixture was set in the range of 8-12 ml/min, so that the internal pressure of the chamber of the high-temperature high-pressure part (A) remained constant (23.0 MPa).

The polymerization was carried out, by charging a 100 mM solution of L-glycine in pure water so that the total volume of the circulation liquid was 500 ml. In this reaction, the pressure in the chamber of the high-temperature high-pressure part (A) with a volume of 15ml, was set at 23.0 MPa, as described above. This pressure slightly exceeds the critical pressure of water (22.1 MPa) and is a pressure value at which water can constantly maintain the liquid phase. The temperature of the chamber of the high-temperature high-pressure part (A) was held within the range of 110-350 °C. The temperature was raised, at the initial stage, from room temperature to a temperature within the aforementioned range in approximately 10 minutes.

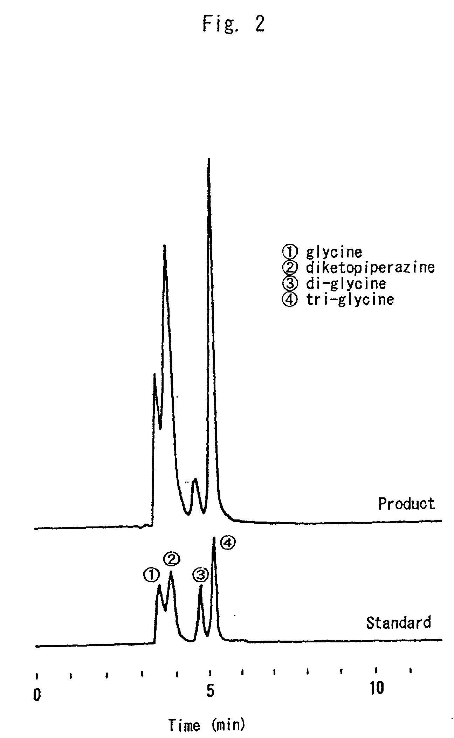

Figure. 2 shows a profile of the products obtained by high precision liquid chromatography (HPLC) observed one hour after setting the temperature of the chamber of the high-temperature high-pressure part (A) at 250 °C. The three types of oligomer generated were confirmed to be diketopiperazine, di-glycine and tri-glycine.

The abscissa of Figure 2 represents the time during which the temperature was maintained. Details of the HPLC column, the eluent, the elution rate and the detection means are as follows.
- HPLC Column:: Shodex ODP-50 4D (4.6 mm × 150 mm)
- Eluent:: 50 mM KH₂PO₄, 7.2 mM CH₃(CH₂)₅SO₂Na, pH 2.5
- Elution Rate:: 0.5 ml/min
- Detection Means:: UV (195 nm)

The production of the aforementioned three types of oligomer was also confirmed by the liquid phase chromatography-mass spectrometry.

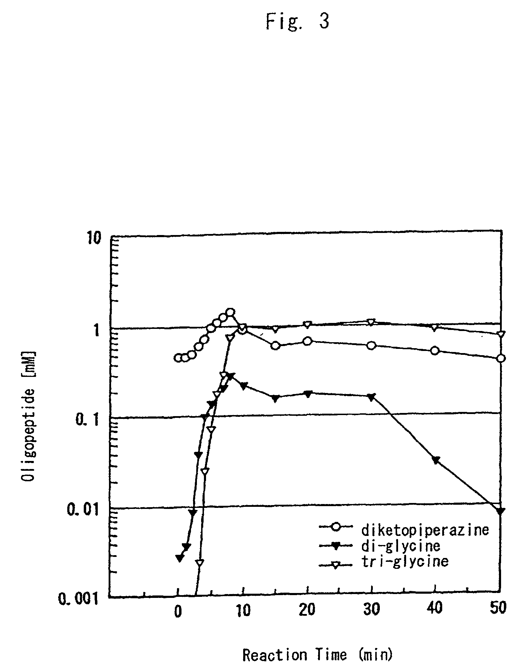

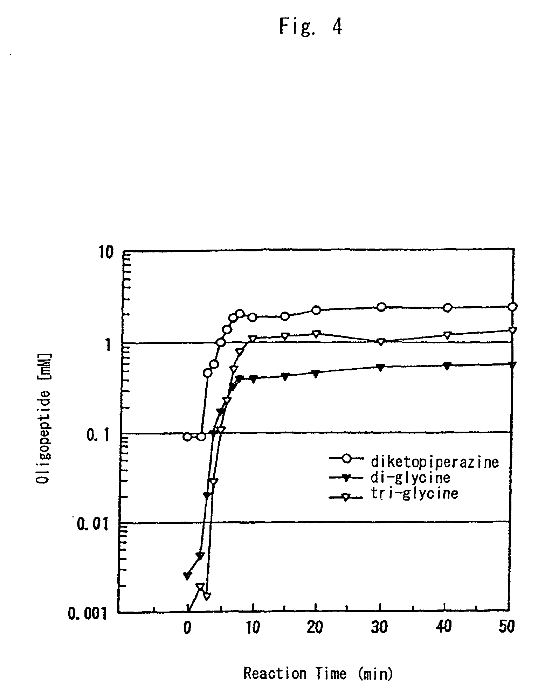

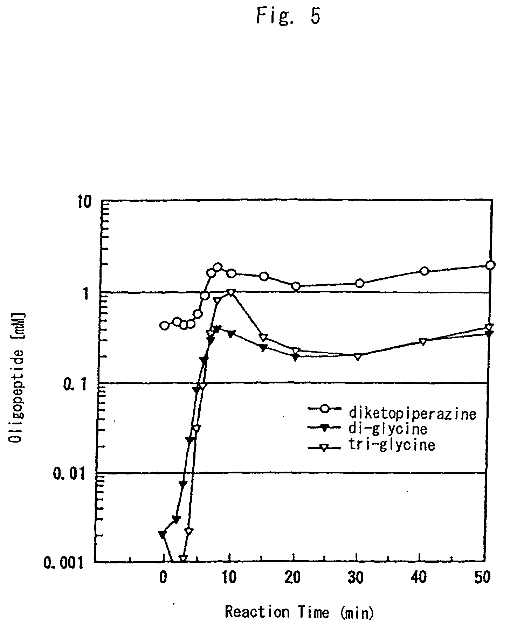

The relationship between the production amount of each of the three types of oligomers and the reaction time when the temperature of the high-temperature high-pressure part (A) was set at 250 °C, 225 °C, and 200 °C are shown in Figures 3, 4 and 5. It should be noted that the production amount of each type of oligomer was calculated from the HPLC peak area.

From the results shown in Figures 3, 4 and 5, it can be said that the production of the oligopeptide significantly increases at the initial stage of the reaction. The initial increase in production was significant, especially for di-glycine and tri-glycine, showing exponential increase in production with time. In other words, this increase corresponds to a self-catalytic reaction.

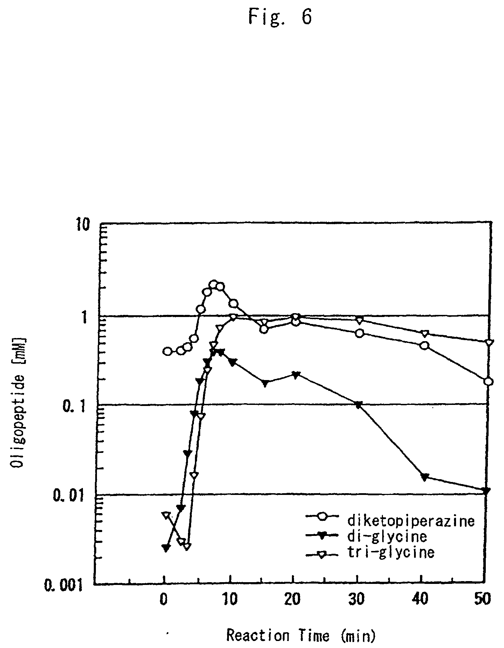

The production of oligopeptide in such a self-catalytic manner was also confirmed for the case in which tri-glycine was added to the glycine solution prior to polymerization. Hence, Figure 6 is a diagram which shows the production with time where 5 µM tri-glycine was added to a 100 mM glycine solution in the high-temperature high-pressure part (A) with a temperature of 250 °C.

The self-catalytic polymerization as described above is not expected in conventional polymerization reactions for which thermal equilibrium is considered. In that sense, such self-catalytic polymerization well represents the notable characteristics of the flow reactor of non-equilibrium open type of the present invention.

### Industrial Applicability

As described above in detail, the invention of the present application provides a novel polymerization technique, which allows the polymerization of low molecular weight organic molecules such as amino acids wherein the degree of polymerization of the polymer product is highly controlled.

## Claims

1. A flow reactor of non-equilibrium open type for liquid-phase polymerization reaction, comprising a high-temperature high-pressure part, a low-temperature high-pressure part and a circulation line connecting the two parts, wherein the liquid reaction mixture containing organic reactant molecules to be polymerized is emitted into the low-temperature high-pressure part from the high-temperature high-pressure part through the circulation line, whereby inhibiting the decomposition of the polymer produced in the high-temperature high-pressure part in the low-temperature high-pressure part, after which the polymer produced is once again sent to the high-temperature high-pressure part through the circulation line for further polymerization, and the same cycle is repeated.

2. The flow reactor of claim 1, wherein the circulation line comprises a low-temperature low-pressure part installed to the downstream side of the low-temperature high-pressure part.

3. The flow reactor of claim 1, wherein the circulation line comprises a low-temperature low-pressure part and a low-temperature high-pressure part installed in sequence to the downstream side of the low-temperature high-pressure part.

4. The flow reactor of claims 2 or 3, wherein an outlet path for the polymer is installed in the low-temperature low-pressure part.

5. The flow reactor of any one of claims 2 to 4, wherein a supply path for the organic reactant molecules to be polymerized is installed in the low-temperature low-pressure part.

6. The flow reactor of any one of claims 1 to 5, wherein the diameter size of the circulation line connecting the high-temperature high-pressure part with the low-temperature high-pressure part is variable and the cooling rate at the low-temperature high-pressure part is controllable.
